# EUROPÄISCHE PATENTSCHRIFT

(11) **EP 1 852 369 B1**
(45) Veröffentlichungstag und Bekanntmachung des Hinweises auf die Patenterteilung: **14.04.2010**
(21) Anmeldenummer: 07450083.6
(22) Anmeldetag: 02.05.2007
(51) Int. Cl.: B65G 17/48, B65G 17/34, B65G 37/00, B23Q 7/00, B27B 25/04

(54) **Quertransporter**
Cross-transporter
Transporteur transversal

(30) Priorität: 05.05.2006 AT 7812006
(43) Veröffentlichungstag der Anmeldung: 07.11.2007
(73) Patentinhaber: Springer Maschinenfabrik AG, 9360 Friesach (AT)
(72) Erfinder: Roth, Heinz,c/o Springer Maschinenfabrik AG, 9360 Friesach (AT); Pichler, Bernhard,c/o Springer Maschinenfabrik AG, 9360 Friesach (AT)
(74) Vertreter: Gibler & Poth Patentanwälte OEG

(56) Entgegenhaltungen:
- WO-A-02/100615
- DE-U1-202006 000 087
- SU-A1- 1 752 552
- US-A- 4 358 009
- US-A1- 2005 150 743

## Beschreibung

Die Erfindung betrifft einen Quertransporter für längliches Stückgut mit wenigstens zwei umlaufenden Fördermitteln, wobei mit den Fördermitteln Mitnehmerelemente verbunden sind, wobei die Mitnehmerelemente eine Auflage für das Stückgut aufweisen und die Auflage höhenverstellbar ausgebildet ist, und wobei die Auflage um eine im Wesentlichen parallel zur Förderebene und parallel zur Förderrichtung angeordnete Drehachse verschwenkbar ist. Ein solcher Quertransporter ist aus der DE 20 2006 000 087 U bekannt. Bekannte derartige Quertransporter weisen die Mitnehmerelemente zur Vereinzelung des Stückgutes auf, wobei die Stückgüter hintereinander und voneinander beabstandet transportiert werden.

Beispielsweise zeigt die SU 1 752 552 A zum Quertransport von länglichem Stückgut ein Förderband mit Mitnehmern und Aufstellelementen. Auch die DE 20 2006 000 087 U, die US 4 358 009 A, die US 2005/150 743 A und die WO 02/100 615 A zeigen Quertransporter.

Aufgabe der Erfindung ist es, einen Quertransporter der eingangs genannten Art derart weiterzubilden, dass die bekannten Nachteile vermieden sind und eine hohe Flexibilität gegeben ist.

Erfindungsgemäß wird dies durch den Quertransporter des Anspruchs 1 erreicht.

Dabei ergibt sich der Vorteil, dass für einzelne Stückgüter eine unterschiedliche Transporthöhe eingestellt werden kann, wobei die Stückgüter auf einfache Weise mit einer Arbeitsstation in Kontakt gebracht werden können, oder an dieser vorbeigeführt werden können. Dabei kann diese Entscheidung für jedes der Stückgüter einzeln getroffen werden. Die Maschinen der Arbeitsstationen brauchen dabei nicht bewegt zu werden. Üblicherweise ist die Masse eines Stückgutes erheblich geringer als die der Maschinen einer Arbeitsstation, die bei dem Transport in einer Ebene bewegt werden müssten, um lediglich einen Teil des Stückgutes zu bearbeiten. Weiters kann der Abstand zwischen zwei Stückgütern gering gewählt werden, da es nicht erforderlich ist, dass bei der Bearbeitung eines der Stückgüter die Vorrichtungen einer Arbeitsstation nach der Bearbeitung aus der Förderebene bewegt werden können, bevor das nachfolgende Stückgut mit der Vorrichtung in Eingriff ist.

Dadurch kann eine Höhenverstellung besonders einfach und schnell durchgeführt werden. Mit dem Stellelement kann die Höhenverstellung besonders einfach erfolgen.

In Weiterbildung der Erfindung kann vorgesehen sein, dass der Quertransporter eine Kulisse zum Zusammenwirken mit dem Stellelement, insbesondere mit der Führungsrolle, aufweist. Mittels der Kulisse können vorgebbare Förderhöhen stabilisiert und über eine vorgebbare Strecke gehalten werden.

Gemäß einer weiteren Ausgestaltung der Erfindung kann vorgesehen sein, dass an dem Stellelement eine Führungsrolle angeordnet ist, wodurch die auftretende Reibung bei der Führung des Stellelementes besonders gering gehalten werden kann.

In diesem Zusammenhang kann in weiterer Ausgestaltung der Erfindung vorgesehen sein, dass eine verstellbare Weiche zum Führen des Stellelementes in die Kulisse vorgesehen ist. Mittels der verstellbaren Weiche kann für jedes Stückgut individuell die Förderhöhe vorgegeben und anschließend realisiert werden.

In weiterer Ausbildung der Erfindung kann vorgesehen sein, dass die Kulisse entlang eines Arbeitsbereiches, insbesondere eines Ausrichtbereiches oder eines Kappbereiches, angeordnet ist, wodurch entlang des gesamten Arbeitsbereiches die Förderhöhe des Stückgutes auf einfache Weise konstant gehalten werden kann.

Gemäß einer weiteren Ausführungsform der Erfindung kann vorgesehen sein, dass das Mitnehmerelement eine Zusatzführung für weitere Förderebene aufweist. Mit der Zusatzführung kann die Anzahl der auszubildenden Förderebenen erhöht werden, wodurch eine weitere Selektierung der vorzunehmenden Arbeitsschritte erfolgen kann.

Die Erfindung wird unter Bezugnahme auf die beigeschlossenen Zeichnungen, in welchen Ausführungsformen beispielhaft dargestellt sind, näher beschrieben. Dabei zeigt:
Fig. 1 eine Ansicht in Förderrichtung einer Ausführungsform eines erfindungsgemäßen Querförderers;
Fig. 2 eine Seitenansicht des Querförderer nach Fig. 1; und
Fig. 3 eine Draufsicht des Querförderers nach Fig. 1.

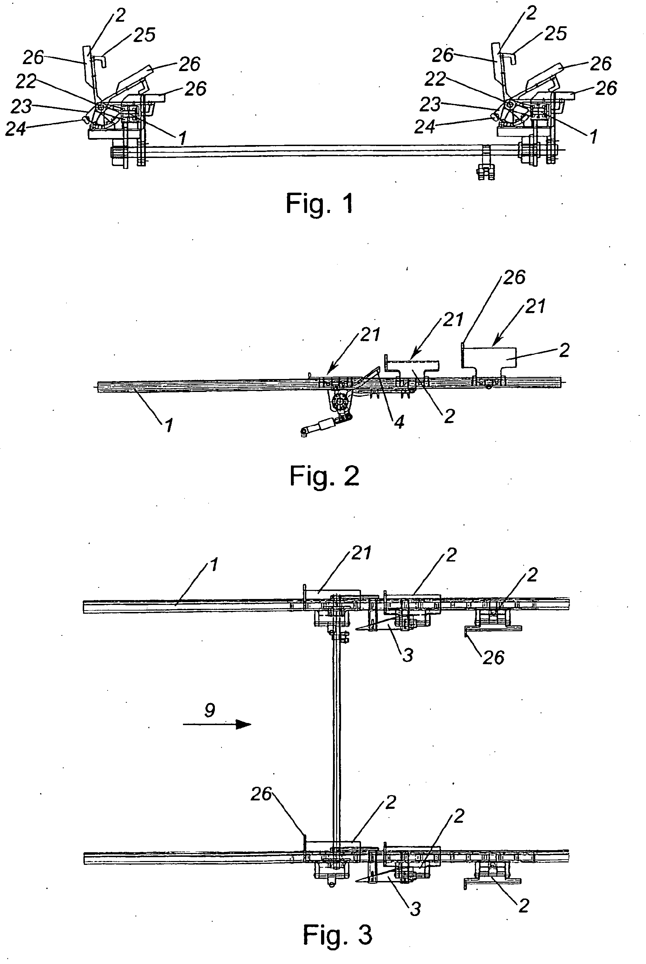

In den Fig. 1 bis 3 ist eine Ausführungsform eines Quertransporters für längliches Stückgut gezeigt, welcher zwei umlaufende Fördermittel 1 aufweist. Die Fördermittel 1 könnten insbesondere Ketten, Gurte oder Seile sein. Abhängig von der Masse und der Länge des zu transportierenden Stückgutes könnten auch mehr als zwei umlaufende Fördermittel 1 vorgesehen sein. Mit den Fördermitteln 1 sind Mitnehmerelemente 2 verbunden, welche eine Auflage 21 für das Stückgut aufweisen. Die Auflage 21 ist höhenverstellbar ausgebildet. Mittels der höhenverstellbaren Auflage 21 kann eines der Stückgüter unabhängig von den anderen Stückgütern angehoben bzw. abgesenkt werden. Dabei kann für dieses Stückgut in einem Arbeitsbereich vorgegeben werden, ob es einem Arbeitsschritt unterworfen wird. Beispielsweise kann es in einem Kappbereich bei abgesenkter Auflage 21 abgekappt werden und bei angehobener Auflage 21 oberhalb der Kappsägen über diesen transportiert werden, wobei die Kappsägen selbst nicht in der Höhe bewegt werden müssen. Dabei kann eine einfache Ausgestaltung des Arbeitsbereiches erreicht werden.

Der durch die höhenverstellbare Auflage 21 ermöglichte Höheunterschied der Förderhöhe des Stückgutes kann vorteilhafterweise in etwa dem eineinhalbfachen der - in der Transportlage am Quertransporter gemessenen - maximalen Höhenerstreckung des länglichen Stückgutes betragen. Dabei kann bei gänzlich abgesenkter Auflage 21 ein Kontakt mit einer Arbeitsstation im Arbeitsbereich über die gesamte Höhenerstreckung des Stückgutes, sowie bei gänzlich angehobener Auflage 21 der Transport des Stückgutes oberhalb der Arbeitsstation sichergestellt werden.

Die Höhenverstellung der Auflage 21 kann erreicht werden, weil die Auflage 21 um eine Drehachse 22 verschwenkbar ist. Durch eine Verschwenkung kann das Stückgut einfach und schnell angehoben und/oder abgesenkt werden. Bei wieder anderen Ausführungsformen kann auch eine Kombination einer Rotation und einer Translation bei der Höhenverstellung der Auflage 21 vorgesehen sein.

Die Drehachse 22 ist im Wesentlichen parallel zur Förderebene und parallel zur Förderrichtung 9 angeordnet. Bei einem im Wesentlichen linienförmigen Fördermittel 1 entspricht die Förderrichtung 9 der Längsrichtung des Fördermittels 1 und wird die Förderebene durch die zumindest zwei Fördermittel 1 gebildet. Dabei ist jeweils der Bereich des Fördermittels zu betrachten auf dem das Stückgut transportiert werden soll. Die Förderebene ist die Ebene, in der das Stückgut transportiert wird.

Zur Höhenverstellung der Auflage 21 umfasst das Mitnehmerelement 2 ein Stellelement 23 , welches insbesondere als Hebelelement ausgebildet sein kann. Dabei kann durch Betätigung des Stellelementes 23 die Höhe der Auflage 21 verändert werden, wobei durch Führung des Stellelementes 23 die Auflage 21 in einer vorgebbaren Höhe gehalten werden kann.

Das Stückgut wird durch die Auflage 21 in einer vorgebbaren Höhe der Förderebene transportiert, wobei die vorgebbare Höhe der Förderebene von der Stellung der Auflage 21 abhängt. Dabei kann das Stückgut bei den unterschiedlichen vorgebbaren Höhen der Förderebene mit unterschiedlichen Bereichen der Auflage 21 in Kontakt stehen.

Die Führung des Stellelementes 23 kann insbesondere mittels einer Kulisse 3 erfolgen, wobei für unterschiedliche Höhen der Auflage mehrere Kulissen 3 vorgesehen sein können. Mittels einer verstellbaren Weiche 4 kann das Stellelement 23 auf einfache Weise selektiv in die Kulisse 3 hineingeführt werden. Dabei kann für jedes Mitnehmerelement 2 individuell vorgegeben werden, ob und gegebenenfalls in welche Kulisse 3 das Stellelement 23 geführt werden soll. Weiters kann mittels der Weiche 4 sichergestellt werden, dass das Stellelement 23 zuverlässig in die Kulisse 3 geführt wird, wobei dies auch bei Maßungenauigkeiten des Stellelementes 23 der Fall ist.

Eine geringe Reibung zwischen der Kulisse 3 und dem Stellelement 23 kann erreicht werden, wenn an dem Stellelement 23 eine Führungsrolle 24 angeordnet ist.

Die Kulisse 3 kann entlang des Arbeitsbereiches angeordnet sein, wobei das Stückgut selektiv einem Arbeitsschritt in dem Arbeitsbereich unterzogen werden kann, indem das Stückgut gegebenenfalls aus dem Eingriff mit im Arbeitsbereich angeordneten Vorrichtungen gebracht wird. Dabei können die Vorrichtungen stationär angeordnet werden, wodurch ein einfacher Aufbau des Arbeitsbereiches erreicht werden kann, welcher beispielsweise als Ausrichtbereich oder als Kappbereich ausgebildet sein kann.

Das Mitnehmerelement 2 kann eine Zusatzführung 25 für weitere Förderebenen aufweisen. Dabei kann vorgesehen sein, dass das Mitnehmerelement 2 auf der Zusatzführung 25 abgestützt wird, wobei unterschiedliche Auflagerhöhen vorgesehen sein können. Insbesondere mittels Weichen od. dgl. können auf diese Weise einfach zusätzliche Förderebenen bereitgestellt werden, wobei das Stellelement 23 nicht für das Erreichen der zusätzlichen Förderebenen benötigt wird.

## Patentansprüche

1. Quertransporter für längliches Stückgut mit wenigstens zwei umlaufenden Fördermitteln (1), insbesondere Ketten, Gurte, Seile, wobei mit den Fördermitteln (1) Mitnehmerelemente (2) verbunden sind, wobei die Mitnehmerelemente (2) eine Auflage (21) für das Stückgut aufweisen und die Auflage.(21) höhenverstellbar ausgebildet ist, und wobei die Auflage (21) um eine im Wesentlichen parallel zur Förderebene und parallel zur Förderrichtung (9) angeordnete Drehachse (22) verschwenkbar ist, **dadurch gekennzeichnet, dass** das Mitnehmerelement (2) ein Stellelement (23) zur Höhenverstellung der Auflage (21), insbesondere ein Hebelelement, umfasst, so dass mittels der höhenverstellbaren Auflage (21) das Stückgut in zumindest zwei unterschiedlichen Förderhöhen transportierbar ist.

2. Quertransporter nach Anspruch 1, **dadurch gekennzeichnet, dass** der Quertransporter eine Kulisse (3) zum Zusammenwirken mit dem Stellelement (23) aufweist.

3. Quertransporter nach Anspruch 2, **dadurch gekennzeichnet, dass** an dem Stellelement (23) eine Führungsrolle (24) angeordnet ist, welche Führungsrolle (24) zum Zusammenwirken mit der Kulisse (3) vorgesehen ist.

4. Quertransporter nach Anspruch 2 oder 3, **dadurch gekennzeichnet, dass** eine verstellbare Weiche (4) zum Führen des Stellelementes (23) in die Kulisse (3) vorgesehen ist.

5. Quertransporter nach Anspruch 2, 3 oder 4, **dadurch gekennzeichnet, dass** die Kulisse (3) entlang eines Arbeitsbereiches, insbesondere eines Ausrichtbereiches oder eines Kappbereiches, angeordnet ist.

6. Quertransporter nach einem der Ansprüche 1 bis 5, **dadurch gekennzeichnet, dass** das Mitnehmerelement (2) eine Zusatzführung (25) für weitere Förderebenen aufweist.

## Claims

1. A transverse conveyor for oblong piece goods, comprising at least two revolving conveying means (1), especially chains, belts, cables, with driver elements (2) being connected with the conveying means (1), with the driver elements (2) having a support (21) for the piece good and the support (21) being arranged to be height-adjustable, and with the support (21) being swivelable about a rotational axis (22) arranged substantially parallel to the conveying lane and parallel to the conveying direction (9), **characterized in that** the driver element (2) comprises an actuating element (23) for the height adjustment of the support (21), especially a lever element, so that the piece good can be conveyed to at least two different conveying heights by means of the height-adjustable support (21).

2. A transverse conveyor according to claim 1, **characterized in that** the transverse conveyor comprises a connecting link (3) for cooperation with the actuating element (23).

3. A transverse conveyor according to claim 2, **characterized in that** a guide roll (24) is arranged on the actuating element (23), which guide roll (24) is provided for cooperation with the connecting link (3).

4. A transverse conveyor according to claim 2 or 3, **characterized in that** an adjustable switch (4) is provided for guiding the actuating element (23) into the connecting link (3).

5. A transverse conveyor according to claim 2, 3 or 4, **characterized in that** the connecting link (3) is arranged along a working region, especially an aligning or trimming region.

6. A transverse conveyor according to one of the claims 1 to 5, **characterized in that** the driver element (2) comprises an additional guide (25) for further conveying planes.

## Revendications

1. Transporteur transversal pour des articles allongés avec au moins deux moyens de transport (1) continus, en particulier des chaînes, des sangles, des câbles, dans lequel des éléments entraîneurs (2) sont reliés aux moyens de transport (1), dans lequel les éléments entraîneurs (2) présentent un appui (21) pour les articles et l'appui (21) est conçu pour être réglable en hauteur, et dans lequel l'appui (21) peut pivoter autour d'un axe de rotation (22) sensiblement parallèle au plan de transport et parallèle à la direction de transport (9), **caractérisé en ce que** l'élément entraîneur (2) comprend un élément d'ajustement (23) pour le réglage en hauteur de l'appui (21), en particulier un élément de levier, de sorte que l'article peut être transporté dans au moins deux hauteurs de transport différentes au moyen de l'appui (21) réglable en hauteur.

2. Transporteur transversal selon la revendication 1, **caractérisé en ce que** le transporteur transversal présente une glissière (3) destinée à coopérer avec l'élément d'ajustement (23)

3. Transporteur transversal selon la revendication 2, **caractérisé en ce qu'**il est prévu sur l'élément d'ajustement (23) un galet de guidage (24), lequel galet de guidage (24) est destiné à coopérer avec la glissière (3).

4. Transporteur transversal selon la revendication 2 ou 3, **caractérisé en ce qu'**un aiguillage (4) réglable est prévu pour guider l'élément d'ajustement (23) dans la glissière (3).

5. Transporteur transversal selon la revendication 2, 3 ou 4, **caractérisé en ce que** la glissière (3) est disposée le long d'une zone de travail, en particulier d'une zone de dégauchissage ou de recoupe.

6. Transporteur transversal selon l'une des revendications 1 à 5, **caractérisé en ce que** l'élément entraîneur (2) présente un guidage supplémentaire (25) pour d'autres niveaux de transport.
